# EUROPÄISCHE PATENTSCHRIFT

(11) **EP 2 431 114 B1**
(45) Veröffentlichungstag und Bekanntmachung des Hinweises auf die Patenterteilung: **13.07.2022**
(21) Anmeldenummer: 11007468.9
(22) Anmeldetag: 14.09.2011
(51) Int. Cl.: B23Q 5/40, B23Q 5/52, B23Q 15/013

(54) **Drehmaschine mit einer Leit- und Zugspindel und einer elektronischen Steuerung für den Längs- und/oder Planschlitten**
Rotating machine with a guide and feed rod and an electronic control for the longitudinal and/or cross slide
Tour doté d'une broche de guidage et de traction et d'une commande électronique pour le coulisseau longitudinal et/ou transversal

(30) Priorität: 17.09.2010 DE 202010012713 U
(43) Veröffentlichungstag der Anmeldung: 21.03.2012
(73) Patentinhaber: Weiler Werkzeugmaschinen GmbH, 91448 Emskirchen (DE)
(72) Erfinder: Eckart, Markus, 91617 Oberdachstetten (DE); Heller, Klaus, 91074 Herzogenaurach (DE); Wäger, Markus, 96178 Pommersfelden (DE)
(74) Vertreter: Mielke, Klaus

(56) Entgegenhaltungen:
- EP-A1- 0 374 259
- EP-A1- 2 070 615
- EP-A2- 0 418 213
- EP-A2- 1 203 632
- WO-A1-2007/032640
- CH-A- 301 879
- FR-A- 1 067 052
- GB-A- 687 999
- US-A- 3 478 626
- US-A- 4 983 899
- US-A- 5 421 229
- US-A1- 2005 052 149

## Beschreibung

Die Erfindung betrifft eine Drehmaschine gemäß dem Oberbegriff des Anspruchs 1 mit einer Hauptspindel mit einem Hauptspindelantrieb zur Aufnahme eines Werkstücks, mit einem ersten Schlitten, insbesondere einem Längsschlitten, der auf einer ersten Achse verfahrbar ist, mit einem zweiten Schlitten, insbesondere einem Planschlitten, der auf einer zur ersten Achse orthogonalen zweiten Achse verfahrbar ist, und mit Leit- und Zugspindeln zum Vorschub des ersten und/oder zweiten Schlittens mit einem Antrieb zumindest für die Zugspindel. Eine solche Drehmaschine ist aus der CH 301 879 A bekannt.

Eine herkömmliche, von Hand steuerbare Drehmaschine, welche die obigen Merkmale aufweist, ist aus der EP 0 418 213 A2 bekannt.

Eine Betriebsart einer konventionellen Leit- und Zugspindeldrehmaschine ist bekanntlich die Bearbeitung eines Werkstücks durch sogenanntes Anschlagdrehen. Dabei wird ein Werkzeug auf einem ersten und zweiten Schlitten mit Hilfe einer Zugspindel in einer Längs- und einer Planrichtung in vorgegebene Endpunkte gefahren, welche durch Festanschläge definiert sind.

Aus der GB 687 999 A ist eine konventionelle Drehmaschine bekannt, bei der Bewegungen durch einen mechanischen Anschlag begrenzt werden.

Bei der Drehmaschine wird hierzu zunächst ein mechanischer Festanschlag auf dem Maschinenbett aufgesetzt, und der jeweils gewünschte Endpunkt durch Positionierung des entlang einer Längsachse einstellbaren Schlittens, d.h. der z-Achse, am Festanschlag über den Oberschlitten eingestellt. Bei einer Werkstückbearbeitung in z-Richtung fährt dieser Längsschlitten gegen diesen Festanschlag auf, wenn der gewünschte Endpunkt erreicht ist. Es wird nun der weitere Vorschub der Zugspindel durch Auslösung einer mechanischen Kupplung im Schlosskasten, z.B. einer Fallschnecke oder Rutschkupplung, unterbrochen.

Bei einem solchen Aufbau tritt jedoch das Problem auf, dass auf Grund des elastischen Verhaltens der mechanischen Bauteile der Bettschlitten die Endposition am mechanischen Festanschlag geringfügig überfährt. Dies ist auch auf die benötigte Vorschubkraft für die Werkstückbearbeitung und die nicht exakte Einstellbarkeit des Auslösemoments der Kupplung zurückzuführen.

Bei der Durchführung einer Werkstückbearbeitung in der Planachse, d.h. der x-Achse, treten entsprechende Probleme auf. Auch dabei wird zunächst ein mechanischer Festanschlag am Planschieber aufgesetzt und der jeweils gewünschte Endanschlag durch Positionierung des Schlittens und Anstellens des Festanschlags definiert. Bei einer Werkstückbearbeitung in x-Richtung fährt auch der Planschlitten gegen diesen Festanschlag auf, wenn der gewünschte Endpunkt erreicht ist. Wiederum wird der weitere Vorschub der Zugspindel ebenfalls durch Auslösung einer mechanischen Kupplung im Schlosskasten unterbrochen. Auch bei diesem Vorgang wird die Endposition am mechanischen Festanschlag geringfügig überfahren, so dass vorgegebene Endpositionswerte nur mit eingeschränkter Genauigkeit erzielbar sind.

In der Praxis kann dieses Problem zwar dadurch umgangen werden, dass der automatische Vorschub durch den Zugspindelantrieb von einem Bediener kurz vor Erreichen einer gewünschten Endposition abgeschaltet und diese durch eine manuelle Bedienung der Drehmaschine angefahren wird. Dies setzt aber eine andauernde Beobachtung einer Werkstückbearbeitung durch eine Person und auch entsprechende Fertigkeiten dieser Person voraus.

Der Erfindung liegt die Aufgabe zu Grunde eine mit einer Leit- und Zugspindel ausgestattete konventionelle Drehmaschine so weiterzubilden, dass die Genauigkeit in der Betriebsart Anschlagdrehen

Die Aufgabe wird mit den Merkmalen von Anspruch 1 gelöst.

Je nach Ausführung der Drehmaschine ist es möglich, dass über die auf den Zugspindelantrieb einwirkende elektronische Steuerung entweder die Bewegungsparameter nur eines Schlittens, oder vorteilhaft zugleich sowohl des ersten als auch zweiten Schlittens beeinflusst werden können.

Die Erfindung bietet bei einer konventionellen Leit- und Zugspindeldrehmaschine eine erhebliche Verbesserung des Vorschubantriebes. Hierdurch ist es einem Bediener möglich, eine höhere Genauigkeit und Prozesssicherheit besonders beim Drehen gegen eine vorgegebene Endposition zu erreichen. Dies wird erfindungsgemäß zum einen durch einen separaten Antrieb für die Hauptspindel mit der Werkstückaufnahme und einen separaten Antrieb zumindest für die Zugspindel erreicht. Über den zusätzlichen Antrieb zumindest der Zugspindel ist es einem Bediener nun mit Hilfe der elektronischen Steuerung möglich, werkstückabhängige Verfahrwege und Endpositionen in Längs- und/oder Planrichtung, und auch Mehrfachanschläge einfach und genau vorzugeben.

Mit der Erfindung ist es möglich, auf eine bisher bei konventionellen Leit- und Zugspindeldrehmaschinen übliche mechanische Auslösung einer Kupplung im Antriebsstrang durch Auffahren eines Schlittens auf einen mechanischen Festanschlag zu verzichten. Vielmehr können gemäß der Erfindung mittels des gesteuerten Vorschubantriebs zumindest der Zugspindel und durch die elektronische Steuerung vorgegebene Endpositionen präzise angefahren werden. Hierdurch ist nicht nur eine genauere Ausführung einer Drehbearbeitung gegen einen Anschlag möglich. Vielmehr wird auch eine erhebliche Entlastung des mechanischen Getriebes im Schlosskasten und des Bettschlittens und aller im Vorschubstrang der Drehmaschinen befindlichen Bauteile erreicht.

Die Schonung der mechanischen Komponenten der Drehmaschine und die Präzision der Erreichung gesetzter Endpositionswerte auf einem Werkstück können weiter dadurch verbessert werden, dass der erste bzw. zweite Schlitten der Drehmaschine von der elektronischen Steuerung mittels einer Verzögerungsfunktion über den gesteuerten Antrieb zumindest der Zugspindel sanft in eine Endposition eingefahren wird. Besonders vorteilhaft erfolgt eine zielgenaue Stillsetzung eines aktiven Schlittens dadurch, dass der Antrieb zumindest der Zugspindel der Drehmaschine von der elektronischen Steuerung mit Erreichen eines Endpositionswertes durch den ersten bzw. zweiten Schlitten abgeschaltet wird.

Vorteilhafte weitere Ausgestaltungen der Erfindung sind in den Unteransprüchen angegebenen.

Die Erfindung und weitere vorteilhafte Ausführungen derselben werden an Hand eines in denen Figuren dargestellten Ausführungsbeispiels nachfolgend näher erläutert. Dabei zeigt
- Fig. 1: eine Prinzipskizze einer gemäß der Erfindung ausgeführten Drehmaschine in einer Seitenansicht auf die Vorschubeinrichtung entlang der z-Achse, und
- Fig. 2: eine Prinzipskizze der beispielhaften Drehmaschine von Fig. 1 in einer Seitenansicht auf die Vorschubeinrichtung entlang der xAchse.

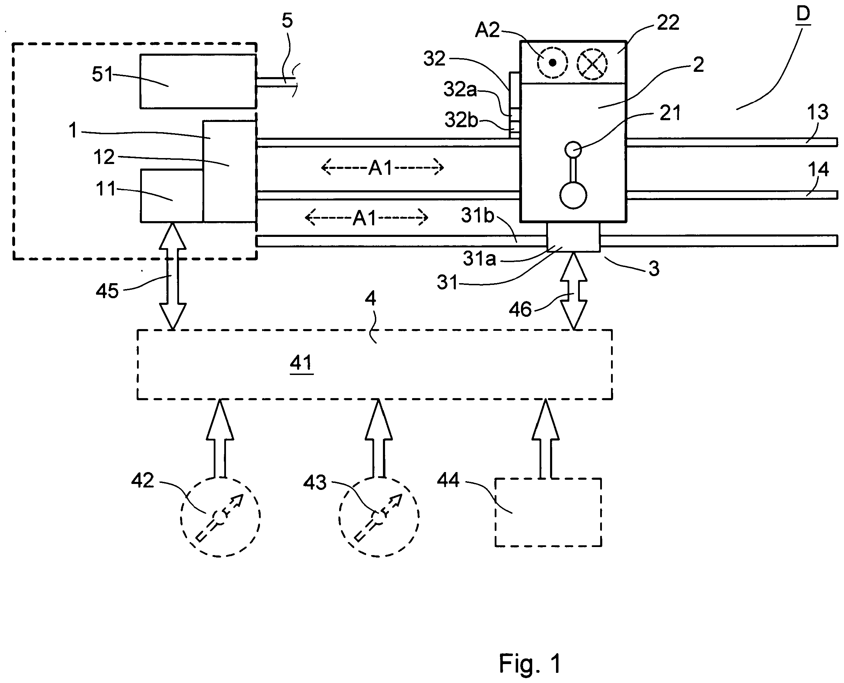

Fig. 1 zeigt eine beispielhafte, gemäß der Erfindung aufgebaute Drehmaschine D in einer ersten Seitenansicht. In einem durch eine gestrichelte Linie auf der linken Seite dargestellten Spindelstock ist ein erster separater Antrieb 51 gezeigt, von dem eine Hauptspindel 5 nach rechts abgeht. Eine daran befindliche Werkstückaufnahme ist aus Gründen der besseren Übersicht in Fig. 1 nicht gezeigt.

Weiterhin ist im Spindelstock ein separater, gemäß der Erfindung gesteuerter Antrieb 1 aus einem, insbesondere drehzahlregelbaren Servomotor 11, und einer Leit- und Zugspindelkopplung 12 dargestellt. Davon gehen nach rechts eine Leitspindel 13 und eine Zugspindel 14 ab. Entgegen herkömmlichen Drehmaschinen dieser Art ist bei der erfindungsgemäßen Drehmaschine D also keine mechanische Verbindung von Hauptspindelantrieb und Vorschubantrieb, d.h. Vorschubgetriebe und Wechselradgetriebe, mehr vorhanden. Vielmehr sind die Hauptspindel und die Leit- und Zugspindeln jeweils mit separaten Antrieben ausgestattet.

Von den Leit- und Zugspindeln 13, 14 wird ein erster Schlitten entlang einer ersten Achse A1 geführt. Im Beispiel der Fig. 1 handelt es sich dabei um den entlang der z-Achse geführten Längsschlitten 2. Über einen Wahlhebel 21 kann die Vorschubrichtung auf der z-Achse umgeschaltet werden. Auf der Oberseite des ersten Schlittens ist weiterhin ein zweiter Schlitten entlang einer zur Zeichenblattebene vertikalen Achse A2 geführt. Im Beispiel der Fig. 1 handelt es sich dabei um den entlang der x-Achse geführten Planschlitten 22.

Auf der Oberseite des Planschlittens 22 ist schließlich ein Werkzeug zur Ausführung von Drehbearbeitungen angebracht. Auf dieses in Fig. 1 nicht dargestellte Werkzeug kann somit in bekannter Weise ein erster Vorschub entlang der ersten Verfahrachse A1, d. h. über den Längsschlitten 2 entlang der z-Achse, und ein zweiter Vorschub entlang der zweiten Verfahrachse A2, d.h. über den Planschlitten 22 entlang der x-Achse, ausgeübt werden.

Zur elektronischen Erfassung der aktuellen Positionen der beiden Schlitten 2 und 22 ist eine elektronische Steuerung mit einem Messsystem 3 vorhanden. Dieses enthält einen ersten Sensor 31 zur Positionserfassung des ersten Schlittens 2. Vorteilhaft ist der erste Sensor 31 mit einem ersten Messkopf 31a zur Abtastung der Position des Längsschlittens 2 entlang eines ersten Linearmaßstabs 31b ausgestattet, welcher parallel zur z-Achse angeordnet ist. Weiterhin ist ein zweiter Sensor 32 mit einem zweiten Messkopf 32a zur Abtastung der Position des Planschlittens 22 entlang eines zweiten Linearmaßstabs 32b vorhanden, welcher parallel zur x-Achse angeordnet ist.

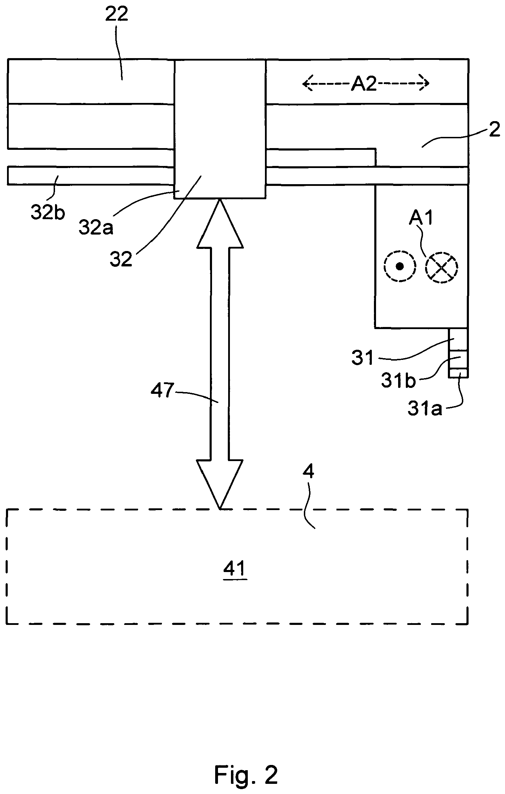

Die vom Sensor 31 erfassten Positionswerte auf der z- Achse werden über eine zweite Datenschnittstelle 46 an die elektronische Steuerung 4 übertragen. Entsprechend werden die vom Sensor 32 erfassten Positionswerte auf der x-Achse über eine dritte Datenschnittstelle 47 an die elektronische Steuerung 4 übertragen. Dabei ist die dritte Datenschnittstelle 47 in der Seitenansicht der Fig. 2 dargestellt.

Die elektronische Steuerung 4 bestimmt nun mit Hilfe eines Soll- und Istwertvergleichers 41 aus den aktuellen Positionswerten auf z- und x-Achse diejenigen Stellsignale für den Antrieb 1, welche benötigt werden, um den jeweiligen Schlitten in eine aktuell gewünschte Endposition zu überführen und mit dessen Erreichung stillzusetzen. Die Stellsignale werden im Beispiel der Fig. 1 über eine erste Datenschnittstelle 45 von der Steuerung an den Servomotor 11 des Antriebs 1 übertragen.

An die Steuerung 4 sind schließlich Bedieneinheiten zur Vorgabe von Bewegungsparametern für den ersten und zweiten Schlitten 2, 22 angeschlossen.

Fig. 1 zeigt beispielweise drei Bedieneinheiten. Über eine erste Bedieneinheit 42 ist in einem ersten Schritt eine Anwahl einer aktiven Verfahrachse möglich. Es kann somit diejenige Achse, d.h. entweder die z- oder die x-Achse, ausgewählt werden, welche für weiteren Bedienungen aktiv sein soll. Nach Anwahl der jeweils gewünschten Achse kann über eine zweite Bedieneinheit 43 die jeweils gewünschte Vorschubrichtung des Schlittens auf der angewählten Achse bestimmt werden. Schließlich können über eine insbesondere bildschirmgeführte dritte Vorgabeeinheit 44 Werte für einzelne Bewegungsparameter des angewählten Schlittens auf der aktiven Achse digital vorgegeben werden, z.B. absolute Positionsendwerte, Bearbeitungslängen u.v.m..

### Bezugszeichenliste

- D: Drehmaschine mit einer Leit- und Zugspindel
- A1: erste Verfahrachse, insbesondere z-Achse für Längsschlitten 2
- A2: zweite Verfahrachse, insbesondere x-Achse für Planschlitten 22
- 5: Hauptspindel
- 51: Antrieb für Hauptspindel
- 1: Antrieb zumindest für Zugspindel
- 11: Servomotor
- 12: Leit- und Zugspindelkopplung
- 13: Leitspindel entlang der z-Achse
- 14: Zugspindel
- 2: Längsschlitten
- 21: Wahlhebel für Vorschubrichtung entlang der z-Achse
- 22: Planschlitten
- 3: Messsystem
- 31: erster Sensor zur Positionserfassung des ersten Schlittens
- 31a: erster Messkopf für Position Längsschlitten auf z-Achse
- 31b: erster Linearmaßstab für z-Achse
- 32: zweiter Sensor zur Positionserfassung des zweiten Schlittens
- 32a: zweiter Messkopf für Position Planschlitten auf x-Achse
- 32b: zweiter Linearmaßstab für x-Achse
- 4: Steuerung
- 41: Soll- und Istwertvergleicher für Positionswerte auf z- und x-Achse
- 45: erste Datenschnittstelle (Steuerung - Servomotor)
- 46: zweite Datenschnittstelle (Steuerung - Sensor z-Achse)
- 47: dritte Datenschnittstelle (Steuerung - Sensor x-Achse)
- 42, 43, 44: Bedieneinheiten
- 42: Anwahl einer Verfahrachse (z- oder x-Achse)
- 43: Anwahl einer Vorschubrichtung auf der angewählten Achse
- 44: Vorgabeeinheit für Bewegungsparameter, z.B. Positionsendwerte

## Patentansprüche

1. Drehmaschine (D) mit
a) einer Hauptspindel (5) mit einem Hauptspindelantrieb (51) zur Aufnahme eines Werkstücks,
b) einem ersten Schlitten (2), insbesondere einem Längsschlitten, der auf einer ersten Achse (A1) verfahrbar ist,
c) einem zweiten Schlitten (22), insbesondere einem Planschlitten, der auf einer zur ersten Achse (A1) annähernd orthogonalen zweiten Achse (A2) verfahrbar ist, und
d) Leit- und Zugspindeln (13, 14) zum Vorschub des ersten und/oder zweiten Schlittens (2, 22) mit einem Antrieb zumindest für die Zugspindel (1, 11, 12),
**gekennzeichnet durch**
e) eine elektronische Steuerung (4), der in einer Betriebsart Anschlagdrehen
e1) als ein Bewegungsparameter (42, 43, 44) für den ersten und/oder zweiten Schlitten (2, 22) zumindest ein Endpositionswert vorgebbar ist, und die elektronische Steuerung
e2) mit Erreichen eines Endpositionswertes durch den ersten und/ oder zweiten Schlitten (2, 22) den Antrieb (1, 11, 12) abschaltet.

2. Drehmaschine nach Anspruch 1, wobei die erste Achse (A1) die z-Achse und die zweite Achse (A2) die x-Achse sind.

3. Drehmaschine nach einem der vorangegangenen Ansprüche, wobei
der erste und/oder zweite Schlitten (2, 22) von der elektronischen Steuerung (4) mittels einer Verzögerungsfunktion sanft in eine Endposition einfahrbar ist.

4. Drehmaschine nach einem der vorangegangenen Ansprüche, wobei die elektronische Steuerung (4) aufweist
a) einen ersten und/oder zweiten Sensor (31, 32) zur Positionserfassung des ersten bzw. zweiten Schlittens (2, 22),
b) Mittel zur Vorgabe zumindest eines Sollwertes für zumindest einen Bewegungsparameter (42, 43, 44) des ersten und/oder zweiten Schlittens (2, 22), und
c) Mittel zur Ableitung von Stellsignalen für den Antrieb (1, 11, 12) aus einem Vergleich eines Sollwertes mit Positionswerten des ersten und/oder zweiten Sensors (31, 32).

5. Drehmaschine nach Anspruch 4, wobei der erste und/oder zweite Sensor (31, 32) jeweils einen ersten bzw. zweiten Messkopf (31a, 32a) mit einem ersten bzw. zweiten Linearmaßstab (31b, 32b) aufweist.

## Claims

1. Lathe (D), having
a) a main spindle (5) with a main spindle drive (51) for receiving a workpiece,
b) a first slide (2), in particular a longitudinal slide, which is displaceable on a first axis (A1),
c) a second slide (22), in particular a cross slide, which is displaceable on a second axis (A2) approximately orthogonal to the first axis (A1), and
d) guide and feed rods (13, 14) for feeding the first and/or second slide (2, 22) with one drive at least for the feed rod (1, 11, 12),
**characterized by**
e) an electronic controller (4), to which, in a stop turning operating mode
e1) at least one end position value can be set as a movement parameter (42, 43, 44) for the first and/or second slide (2, 22) and the electronic controller
e2) disconnects the drive (1, 11, 12) when the first and/or second slide (2, 22) reaches an end position value.

2. Lathe according to claim 1, wherein
the first axis (A1) is the z-axis and the second axis (A2) is the x-axis.

3. Lathe according to any of the foregoing claims, wherein
the first and/or second slide (2, 22) can be gently inserted from the electronic controller (4) into an end position by means of a delay function.

4. Lathe according to any of the foregoing claims, wherein the electronic controller (4) comprises
a) a first and/or second sensor (31, 32) for detecting the position of the first or second slide (2, 22),
b) means for specifying at least one set-point value for at least one movement parameter (42, 43, 44) of the first and/or second slide (2, 22), and
c) means for deriving actuating signals for the drive (1, 11, 12) from the comparison of a set-point value with position values of the first and/or second sensor (31, 32).

5. Lathe according to claim 4, wherein the first and/or second sensor (31, 32) respectively comprises a first or second measurement head (31a, 32a) with a first or second linear scale (31b, 32b).

## Revendications

1. Tour (D) avec
a) une broche principale (5) avec un entraînement de broche principale (51) pour la réception d'une pièce,
b) un premier coulisseau (2), en particulier un coulisseau longitudinal, qui est déplaçable sur un premier axe (A1),
c) un deuxième coulisseau (22), en particulier un coulisseau transversal, qui est déplaçable sur un deuxième axe (A2) à peu près perpendiculaire au premier axe (A1), et
d) des broches de guidage et de traction (13, 14) pour l'avancement du premier et/ou deuxième coulisseau (2, 22) avec un entraînement au moins pour la broche de traction (1, 11, 12),
**caractérisée par**
e) une commande électronique (4), qui dans un mode de fonctionnement rotation jusqu'à la butée
e1) au moins une valeur de position finale peut être prédéfinie comme un paramètre de mouvement (42, 43, 44) pour le premier et/ou deuxième coulisseau (2, 22), et la commande électronique
e2) avec l'atteinte d'une valeur de position finale par le premier et/ou deuxième coulisseau (2, 22) met l'entraînement (1, 11, 12) hors circuit.

2. Tour selon la revendication 1, dans lequel
le premier axe (A1) est l'axe z et le deuxième axe (A2) l'axe x.

3. Tour selon l'une quelconque des revendications précédentes, dans lequel
le premier et/ou deuxième coulisseau (2, 22) peuvent être entrés doucement dans une position finale par la commande électronique (4) au moyen d'une fonction de décélération.

4. Tour selon l'une quelconque des revendications précédentes, dans lequel la commande électronique (4) présente
a) un premier et/ou deuxième capteur (31, 32) pour la détection de position du premier ou deuxième coulisseau (2, 22),
b) des moyens pour la définition d'au moins une valeur de consigne pour au moins un paramètre de mouvement (42, 43, 44) du premier et/ou deuxième coulisseau (2, 22), et
c) des moyens pour la déduction de signaux de réglage pour l'entraînement (1, 11, 12) d'une comparaison d'une valeur de consigne aux valeurs de position du premier et/ou deuxième capteur (31, 32).

5. Tour selon la revendication 4, dans lequel le premier et/ou deuxième capteur (31, 32) présente respectivement une première ou deuxième tête de mesure (31a, 32a) avec une première ou deuxième échelle linéaire (31b, 32b).
